# EUROPEAN PATENT APPLICATION

(11) **EP 2 108 267 A1**
(43) Date of publication of application: **14.10.2009**
(21) Application number: 09005305.9
(22) Date of filing: 14.04.2009
(51) Int. Cl.: A23L 1/10, A23L 1/308

(54) **Solubility-reduced, beta-glucan containing products and methods of producing and using such products**

(30) Priority: 11.04.2008 US 44147 P
(71) Applicant: Vasanthan, Thava, Edmonton AB T6G 2P5 (CA)
(72) Inventor: The designation of the inventor has not yet been filed
(74) Representative: Wilson Gunn

(57) **Abstract**

The present invention relates to a method of producing solubility-reduced, beta-glucan containing products and uses thereof as raw materials in aqueous fractionation to produce starch and beta-glucan concentrates. The present invention extends to foods containing the solubility-reduced, beta-glucan products, and the starch and beta-glucan concentrates obtained by the described method.

## Description

### Field of the Invention

The present invention relates to a method of producing solubility-reduced, beta-glucan containing products, and further relates to methods of use thereof as raw materials in aqueous fractionation to produce starch or beta-glucan concentrates.

### Background of the Invention

Cereal grains such as barley and oat contain valuable grain components including starch and a non-starch polysaccharide (biopolymer) known as beta 1-4, 1-3 mixed linkage glucan (hereinafter "beta-glucan"). Beta-glucan is a cell-wall component, concentrated primarily in the endosperm region of the grain. It is a water-soluble dietary fibre and its content varies depending on the genotype of barley (up to 15%, w/w) and oat (up to 7%, w/w).

Nutritional studies have demonstrated a link between the regular consumption of foods containing cereal beta-glucan at physiologically effective concentrations and a reduced risk of chronic health problems; for example, cardiovascular disease through lowering of blood serum cholesterol (Braaten *et al*., 1994) and diabetes through regulation of blood glucose levels (Wood *et al.,* 1994). Based on evidence from animal and clinical trials, the US Food and Drug Administration (FDA) authorized a health claim on the relationship between oat and barley beta-glucan and reduced risk of coronary heart disease (Department of Health and Human Services, US FDA 2003, 2006). In order to bear this health claim, a food product must provide at least 0.75 g of beta-glucan per serving. Consequently, food and supplement industries have become greatly interested in the commercial scale concentration of beta-glucan for its inclusion in their product formulations.

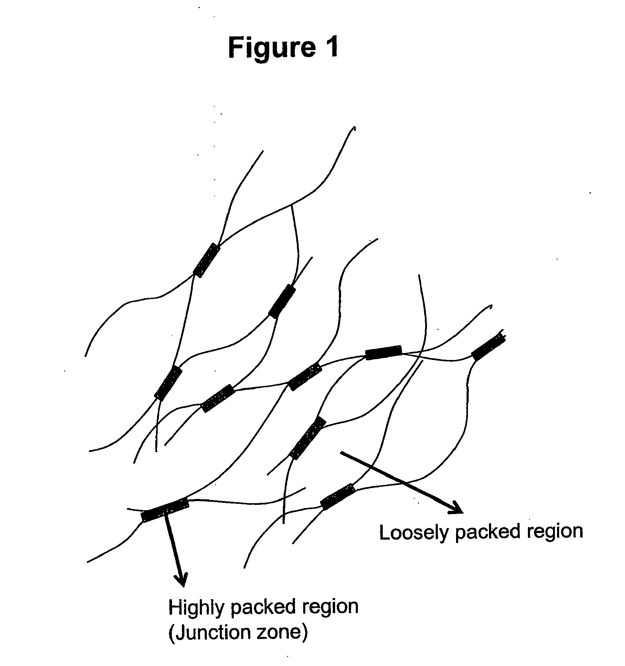

Upon mixing with aqueous solutions, beta-glucan forms a thick viscous solution. The viscosity is primarily attributed to beta-glucan's ability to solubilise in water and to form a micelle network (Figure 1). The mechanism of action for the health benefits of beta-glucan is also attributed to micelle network formation and the viscosity increase of intestinal digesta (Jenkins *et al.,* 1978; Wood *et al*., 1994). These properties (i.e. network formation and consequent high viscosity) slow down the process of digestion and absorption of starch/sugar (which is beneficial to people suffering from Type-2 diabetes) and also trap bile acids (which is beneficial to people suffering from hypercholesterolemia). High molecular weight and high solubility of beta-glucan are significant characteristics for viscosity development and consequent human physiological benefit.

Attempts have been made, with limited success, to utilize cereal grain meal, flour and bran in formulations of conventional food products such as bread, pasta, noodle, etc. Although high aqueous viscosity development contributes to the health benefits of beta-glucan, high viscosity is problematic during food formulation and processing. For example, in baking applications, the dough mixing, portioning and handling are difficult due to elevated viscosity, especially at industrial scale.

Techniques for cereal grain fractionation focusing on the concentration of beta-glucans through solubilization and subsequent ethanol precipitation methodology are known. See for example, US Patent No. 4,018,936 to Garbutt et al.*,* US Patent No. 5,512,287 to Wang et al.*,* US Patent Nos. 5,614,242, 5,725,901 and 6,197,952 to Fox, US Patent No. 6,113,908 to Paton et al.*,* US Patent No. 5,169,660 to Collins, US Patent No. 5,312,636 to Myllymaki, US Patent No. 5,518,710 to Bhatty, and US Patent No. 5,846,590 to Maltai.

Amylase enzymes have been used for hydrolysing starch during grain processing. See for example, US Patent No. 4,804,545 to Goering, US Patent No. 5,013,561 to Goering et al.*,* US Patent No. 5,082,673 to Inglett, and US Patent No. 3,912,590 to Slott.

Mechanically concentrating beta-glucans by size reduction and sieving/air classification practices are described in US Patent No. 5,063,078 to Foehse, US Patent No. 5,725,901 to Fox, and US Patent No. 6,083,547 to Katta.

Low concentration ethanol solutions have been used for recovering beta-glucan, as described in US Patent Nos. 5,106,640 and 5,183,677 to Lehtomaki. Miscellaneous grain fractionation techniques are described in US Patent No. 5,106,634 to Thacker, US Patent Nos. 4,211,801 and 4,154,728 to Oughton, US Patent No. 3,950,543 to Buffa, US Patent No. 4,431,674 to Fulger, and US Patent No. 5,312,739 to Shaw.

Further, during aqueous fractionation processing (i.e., secondary processing to separate grain components such as starch, protein and beta-glucan into their concentrates) of cereal grain products such as groat, pearled groat, meal, flour, or bran to produce starch, protein and beta-glucan concentrates, the high water solubility and thickening of beta-glucan impose technical challenges; for example, difficulty in slurry mixing, screening, centrifugation and drying. Commercial scale fractionation of beta-glucan-containing grain materials typically requires excessive water consumption and incurs undesirable expense due to an extended product recovery (i.e. longer centrifugation time to recover starch, requirement for ethanol/solvent usage to recover solubilized beta-glucan from solution), drying and effluent water disposal. Hence concentrates of starch and protein from "beta-glucan containing flours" (i.e. barley and oat) have not been produced for high volume applications. Due to high cost of production attributed to the aforementioned challenges, to date, utilization of cereal beta-glucan concentrates has been limited to high value applications in health food, nutritional supplement, weight loss and cosmetic products, and has been prohibited in functional food applications, where potential for high volume usage exists.

In aqueous-based beta-glucan concentration processes, beta-glucan is first solubilized in excess water that may or may not contain alkaline chemicals such as NaOH and Na₂CO₃. Centrifugation is then applied to separate the water/aqueous phase containing solubilized beta-glucan from the insoluble solid phase. Finally, beta-glucan is recovered from the solution by various drying techniques or by alcohol precipitation methods often using either ethanol or propanol. Aqueous processes for beta-glucan concentration are usually cumbersome and very costly.

In slurry and screen beta-glucan concentration processes, a ground or unground grain such as oats or barley is slurried rapidly in cold water, which may contain an organic solvent. The slurry is homogenized rapidly and is then screened. Beta-glucan is recovered with the insoluble portion on the screen. The separation and concentration is basically achieved on the basis of particle size by appropriately selecting the pore size of the screen. The process must be carried out rapidly in order to avoid hydration of beta-glucan, which occurs quite rapidly. This rapid hydration makes commercial scale processes difficult because slurrying and screening and subsequent drying takes considerable amount of time. This time scale is more than adequate for good portion of beta-glucan in the flour to hydrate, solubilize and thicken the slurry, leading to clogging of screen-pores and other aforementioned technical challenges in further processing. Semi-alcoholic liquids (>40% v/v, alcohol) are recommended in the slurry and screen technologies, in order to prevent or delay the hydration of beta-glucan thus avoiding technical challenges. This use of alcohol as suggested above will further increase the cost of production due to requirements related to recovery and recycling of alcohol.

### Summary of the Invention

The present invention relates to a method of producing solubility-reduced, beta-glucan containing products, and methods of use thereof as raw materials in aqueous fractionation to produce beta-glucan and starch concentrates, primarily for, but not limited to food applications. In one aspect, the invention comprises a method of producing a solubility-reduced, beta-glucan containing product from plant material comprising beta-glucan, comprising the step of heating the plant material at an elevated temperature greater than about 50° C. The heated plant material may then be milled under dry conditions and sieved.

The method may comprise the further optional step of forming a meal or flour from the plant material prior to heating. The method may also comprise the further optional step of adjusting the moisture content of the plant material by mixing the plant material with water before heating, or drying the plant material.

In one embodiment, the plant material is selected from a cereal grain, groat, de-hulled grain, hull-less grain, pearled grain, pearled groat, meal, flour or bran. In one embodiment, the cereal grain is barley grain or oat grain.

In one embodiment, the desired temperature of heat treatment to plant material is preferably at least 70°C, or any value higher than 70°C, such as 80°C, 90°C, 100°C, 120°C, 140°C, 160°C, or 180°C. In general, higher temperatures are more preferred. In one preferred embodiment, the desired temperature is at least about 190°C.

In one embodiment, the moisture content of the plant material, meal or flour is adjusted to less than 40% (w/w) or any value less than 40%, such as 20% (w/w), or 10% (w/w). In general, lower moisture content is preferred. In one embodiment, the moisture content is not adjusted (i.e. heat treatment carried out with native plant material moisture).

In one embodiment, the plant material, meal, or flour is heated at the desired temperature for a duration of preferably at least 5 minutes, or any duration longer than 5 minutes such as 15 minutes, 30 minutes, 60 minutes, 120 minutes, or 180 minutes. In general, a longer duration is preferred. In one embodiment, the heating duration is at least about 20 hours.

In one embodiment, the plant material, meal or flour is heated at least 120°C or at least 140°C for 180 minutes. In another embodiment, the plant material, meal or flour is heated at least 180°C or 190°C for 30 or 60 minutes.

In one embodiment, the method further comprises the step of contacting, such as by mixing or slurrying the solubility-reduced, beta-glucan containing product with water, and recovering a starch rich concentrate and a first beta-glucan concentrate. In one embodiment, the starch rich concentrate or the first beta-glucan concentrate, or both concentrates, are further purified.

In one embodiment, the method further comprises the step of contacting, such as by mixing or slurrying the first beta-glucan concentrate with water and recovering a second fiber concentrate that is further enriched in beta-glucan. In one embodiment, the method further comprises the step of extrusion processing the second beta-glucan concentrate, recovering a pellet, drying and followed by milling under dry conditions and sieving to obtain a solubility enhanced (i.e. soluble in water),beta-glucan concentrate. In one embodiment, the method further comprises the step of cooking, baking or boiling the second beta-glucan concentrate to obtain a soluble, beta-glucan concentrate.
In another aspect, the invention provides a product containing solubility-reduced beta-glucan obtained by the above method. In one embodiment, the solubility of the beta-glucan is preferably less than 40% w/w (% of the total beta-glucan available in the plant material), more preferably less than 30% w/w , more preferably less than 20% w/w, or most preferably less than 10% w/w. In one embodiment, the invention comprises a oat-based beta-glucan product having a solubility of less than 35%. In another embodiment, the invention comprises a barley-based beta-glucan product having a solubility of less than about 25%.

In another aspect, the invention comprises a food comprising the solubility-reduced beta-glucan product disclosed herein.

In another aspect, the invention comprises a soluble beta-glucan concentrate produced from a solubility-reduced beta-glucan product, and a food comprising the soluble beta-glucan concentrate.

Additional aspects and advantages of the present invention will be apparent in view of the description, which follows. It should be understood, however, that the detailed description and the specific examples, while indicating preferred embodiments of the invention, are given by way of illustration only, since various changes and modifications within the spirit and scope of the invention will become apparent to those skilled in the art from this detailed description.

### Brief Description of the Drawings

The invention will now be described in relation to the drawings in which:

Figure 1 is a schematic representation of the beta-glucan micelle network that is responsible for the viscosity development (Prior Art).

Figure 2 is a flow diagram which schematically illustrates one embodiment of a method to produce barley and oat flours containing low solubility beta-glucan.

Figure 3 is a flow diagram which schematically illustrates one embodiment of a method to produce starch and beta-glucan concentrates.

Figure 4 is a flow diagram which schematically illustrates one embodiment of a method to produce high solubility beta-glucan concentrate from low-solubility beta-glucan concentrate, using extrusion processing.

Figures 5A and 5B shows graphs illustrating the aqueous slurry viscosities of barley (5A) and oat (5B) meal produced from native, stabilized (a short duration steam treatment commonly performed by oat industries to inactivate enzymes that are native to grains) and heat treated grains.

### Detailed Description of Preferred Embodiments

As will be apparent to those skilled in the art, various modifications, adaptations and variations of the foregoing specific disclosure can be made without departing from the scope of the invention claimed herein. The various features and elements of the described invention may be combined in a manner different from the combinations described or claimed herein, without departing from the scope of the invention.

To facilitate understanding of the invention, the following definitions are provided.

"Beta-glucan" means a beta 1-3, 1-4 mixed linkage glucan found in cereal grains such as from barley and oat.

"Groat" means de-hulled grain which is devoid of hulls.

"Hulls" means a fibrous outer tissue of grains.

"Pearling" of grains or groats means the removal of grain or groat tissues layer by layer from the exterior towards the interior by abrasive forces. "Pearled grain" or "pearled groat" is grain or groat which has been pearled.

"Meal" refers to milled groats.

"Fractionation" of grains means the separation and concentration of grain components (such as starch, protein, fibre, etc) into their higher purity concentrates.

"Heat treatment" refers to the application of heat to a plant material at a desired temperature. Heat treatment may be conducted with or without adjusting the moisture content of the plant material.

"Soluble" means the ability for a given substance, the solute, to dissolve in a solvent, for example, an aqueous solution. "Insoluble" means the inability for a given substance, the solute, to dissolve in a solvent, for example, an aqueous solution. A substance may have reduced solutibility if it is less soluble than its pre-processed form by an appreciable amount, for example, by 5% or more.

The present invention relates to a method of producing solubility-reduced, beta-glucan containing products and uses thereof as raw materials in aqueous fractionation to produce starch and fibre concentrates. The reduction in beta-glucan solubility will minimize its hydration and viscosity development during aqueous processing and thus would minimize or alleviate technical challenges during processing. In one embodiment, the fibre concentrates are beta-glucan concentrates.

Products of the present invention originate from plant materials containing beta-glucan. Such plant materials typically also contain starch and fibre. Suitable plant materials include, but are not limited to, cereal grain, groat, de-hulled grain, hull-less grain, pearled grain, pearled groat, meal, flour and bran. In one embodiment, the cereal grain is barley grain or oat grain.

Beta-glucan is a cell-wall component. Although there is lack of scientific understanding on how beta-glucan molecules exist in the cell wall (i.e., the supra-molecular chemistry of beta-glucan), research on this molecule's structure, its deformation or flow in response to an applied stress, and its storage stability suggests that it may exist in the cell wall as a network composed of both loosely and highly packed regions, where the molecular association in the regions is facilitated by hydrogen bonding (Figure 1). The hydration potential or water solubility of the loosely and highly associated regions depends on the extent of hydrogen bonding between the segments of beta-glucan molecules. Upon adding cold water to beta-glucan, the loosely packed regions hydrate faster and solubilize. In contrast, the highly packed regions remain insoluble due to inability of water to penetrate the region.

However, upon heating to higher temperatures (usually above 80°C) in the presence of excess water, beta-glucan becomes fully solubilized and causes significant viscosity development in solution. The heat and moisture combination thus leads to the melting or dissociation of both the loosely and most of the highly packed regions. Water acts as a plasticizer in this melting and solubilization process. For melting to occur, the temperature should surpass the "glass transition temperature" at which the energy applied to the biopolymer matrix allows the molecular segments to become mobile or vibrate. The temperature should then exceed the "melting temperature" of the associated region. The glass transition and melting temperatures of the beta-glucan associations depend on the extent of heat and moisture conditions provided. The melting and glass transition temperatures of beta-glucan remain low if heating is performed under high moisture conditions.

To date, studies on various thermal treatments to beta-glucan (for example, extrusion, autoclaving, steaming) have reported a solubility increase, since these treatments usually involve high heat and moisture conditions. However, the inventor has demonstrated that heat treatment under limited moisture content (<40%, w/w) substantially reduces beta-glucan solubility and solution viscosity. Without being limited to a theory, this finding indicates that heat and reduced moisture conditions promote intermolecular associations, resulting in a network of beta-glucan in the cell wall that is highly packed and hence less soluble in cold water.

Further, the invention relates to the preparation of low and high solubility beta-glucan products. In one embodiment, the invention provides a food/ingredient comprising the product containing solubility-reduced beta-glucan obtained by the described method. In one embodiment, the invention provides a soluble, beta-glucan concentrate obtained by the described method. In one embodiment, the invention provides a food comprising the soluble beta-glucan concentrate obtained by the above method. Such products are prepared by treating plant material with heat, and adjusting moisture conditions and treatment duration.

In prior art extraction procedures, beta-glucan is initially solubilized and recovered by expensive and time-consuming techniques such as alcohol precipitation, drum drying or freeze drying. In contrast, the present invention provides a method in which beta-glucan is not solubilized in an aqueous solution. Since beta-glucan is not solubilized (i.e., is present in an insoluble form), it remains intact within the native cell wall where it is protected from shear fragmentation and degradation by endogenous enzymes (for example, cellulase and beta-glucanase) during aqueous processing. The beta-glucan concentrate thus displays superior physicochemical properties (i.e. high molecular weight and solution viscosity upon subsequent solubilisation by selected methods). In the present invention, combinations of heat and moisture treatments are shown to substantially reduce the solubility of beta-glucan, thereby minimizing viscosity development during further processing.

Thus, in one embodiment, the present invention provides a method of producing a solubility-reduced, beta-glucan containing product from plant material comprising the steps of:
(a) optionally forming a meal or flour from the plant material;
(b) optionally adjusting the moisture content of the plant material by mixing the plant material with water, or by drying the plant material before heating;
(c) heating the plant material with a moisture content of 40% or lower at an elevated temperature of about 50° C or higher; and
(d) optionally milling the plant material under dry conditions and sieving.

In one embodiment, the desired temperature is at least 70°C, 80°C, 100°C, 120°C, 140°C, 160°C, or 180°C or is about 190°C.

In one embodiment, the moisture content of the plant material, meal or flour is any value less than 40%, such as less than 30%, 20% (w/w), or 10% (w/w). In general, lower moisture content is preferred. In one preferred embodiment, the moisture content is not adjusted (i.e. heat treatment carried out with native plant material moisture). Native moisture content of plant material is typically about 10%.

In one embodiment, the plant material, meal, or flour is heated at the desired temperature for a duration of preferably at least 5 minutes, 15 minutes, 30 minutes, 60 minutes, 120 minutes, 180 minutes, or longer. In one embodiment, the treatment may last for many hours, such as at least 20 hours.
In one embodiment, the plant material is heated at at least 190°C for 30 minutes. In one embodiment, the plant material is heated at at least 160°C or at least 180°C for 60 minutes. In one embodiment, the plant material, meal or flour is heated at at least 120°C or at least 140°C for 180 minutes. In one embodiment, the plant material, meal or flour is heated at at least 80°C or at least 100°C for 20 hours.

The plant material, after heat treatment, may then be milled, or ground under dry conditions, to obtain a relatively uniform particle size, and may be sieved with a suitable mesh size screen.

The plant material, after heat treatment, is a solubility-reduced, beta-glucan containing product. In one embodiment, the water solubility of the beta-glucan is preferably less than 40% w/w (40% of the total beta-glucan available in the plant material), such as less than 35,%, 30%, 25%, 20% , 15%, 10% or 5% w/w. In one embodiment, the water solubility of the beta-glucan is reduced by greater than 5% from the water-solubility of the native plant material without treatment.

The solubility-reduced beta-glucan containing product may be fractionated to produce a solubility-reduced beta-glucan concentrate, as described below.

Since high solubility is important for the physiological efficacy (i.e., bioactivity and health benefits) of beta-glucan, the reduced solubility of the beta-glucan needs to be restored for use in end-products. Solubility of beta-glucan in native barley flour may be increased by extrusion processing under high moisture and high temperature conditions (Gaosong *et al*., 2000; Vasanthan *et al.,* 2002). However, hydro-thermal treatments such as autoclaving and steaming have no effects on the extractability (i.e. solubility) of beta-glucan (Izydorczyk *et al.,* 2000). Cereal (oat) beta-glucan in muffins underwent solubility reduction upon freeze-thaw treatments (Beer *et al.,* 1997; Lan-Pidhainy *et al.,* 2007; International Publication No. WO 1998/013056).

In the present invention, the solubility-reduced beta-glucan produce or concentrate may have its solubility restored to produce a valuable and functional soluble form by cooking, baking, boiling, high temperature extrusion or other techniques known in the art. In one embodiment, beta-glucan solubility can be restored by subjecting the low soluble beta-glucan to elevated heat and moisture conditions. In one embodiment, the insoluble beta-glucan is re-solubilised using high temperature extrusion. Extrusion processed and solubility enhanced beta-glucan concentrate products can then be used in health-food, supplement and weight-loss formulations, as these products are mostly consumed directly without any heat processing.

Thus, in one embodiment, the previously described method comprises the further step of contacting the solubility-reduced, beta-glucan containing product with water, and recovering a starch rich concentrate and a first beta-glucan concentrate. In one embodiment, the starch rich concentrate or the first beta-glucan concentrate, or both concentrate, are further purified.

The heat treated products may be ground and sieved to a desirable particle size distribution (for example, 100% pass through 500 micron or 250 micron sieve) and then mixed with water (for example, meal/flour:water = 1:5 w/v), and screened through a very fine screen (for example, about 65 microns pore size). The filtrate contains the suspended starch fraction, which then may be centrifuged to recover crude starch concentrate. The material left behind on the screen comprises the beta-glucan concentrate. The beta-glucan concentrate may be washed again with water, screened again to recover the insoluble beta-glucan concentrate, and then dried.
In one embodiment, the method further comprises the step of processing the beta-glucan concentrate to obtain a soluble, beta-glucan concentrate. The beta-glucan concentrate may be cooked, baked or boiled. In one embodiment, the beta-glucan concentrate may be extrusion processed, recovering a pellet, followed by milling under dry conditions and sieving to obtain a soluble, beta-glucan concentrate.

The inventors have demonstrated the reduction and restoration of the aqueous solubility of beta-glucan in barley and oat grains, as described in the Examples. As shown in Examples 1 and 2, three types of barley grains and two types of oat grains were initially screened to assess their ash, protein, starch, and beta-glucan concentrations (Table 1).

Example 3 sets out an experiment comparing a) heat treatment with or without adjusting the moisture content of whole barley and oat grains, and b) heat treatment of milled barley and oat grains (meal or flour). As described in Example 4, the test and native samples were further evaluated for their beta-glucan solubility as determined at 25°C (Table 2). In barley the highest solubility reduction was achieved when heat treatment was performed at 140°C for 3 hours with no moisture adjustment prior to heat treatment, whereas in oat, the highest solubility reduction was achieved when heat treatment was performed at 190°C for 30 minutes with no moisture adjustment prior to heat treatment. Under these conditions, the beta-glucan solubility of barley flour and oat meal was substantially reduced to approximately 10-17%. The effect of heat-treated barley and oat grains (with no moisture adjustment) on beta-glucan solubility (determined at 25°C) was examined (Table 4). The highest reduction in beta-glucan solubility was achieved when heat treatment was performed at 140°C for 3 hours. Under these conditions, the beta-glucan solubility of barley and oat was substantially reduced to approximately 9-11 %. Viscosity of the samples was further assessed (Example 5).

Examples 6 and 7 describe the use of the obtained solubility-reduced, beta-glucan containing products as raw materials in aqueous fractionation to produce starch and beta-glucan concentrates. For use in end-products directed to consumers, the reduced solubility of beta-glucan needs to be restored since high solubility is important for the physiological efficacy (i.e., bioactivity and.human health benefits) of beta-glucan. The effect of extrusion processing on the solubility of the beta-glucan concentrate was examined (Table 5), with the results indicating that the low beta-glucan solubility of the fibre concentrate can be substantially increased by extrusion processing.

The Examples provided below are not intended to be limited to these examples alone, but are intended only to illustrate and describe the invention rather than limit the claims that follow.

Example 1 - Grain samples

The genotypes of barley grains included a hull-less waxy (CDC-Fibar), a hull-less regular (CDC-McGuire), and hull-less High Amylose (Dr. Brian Rossnagal, University of Saskatchewan, Saskatoon, Canada). The genotypes of oat grains included regular oat (Derby) and high beta-glucan oat (HiFi) (Can Oat Milling, Winnipeg, Canada).

Example 2 - Chemical analyses

Moisture, ash and protein were determined according to standard procedures of the American Association of Cereal Chemists (Approved Methods AACC, 10^{th} Edition, 2000). Starch and beta-glucan contents were determined using the Total Starch assay kit and the Mixed-Linkage Beta-Glucan assay kit (Megazyme International Ireland Ltd., Wicklow, Ireland). Table 1 summarizes the results of the chemical analyses.

**Table 1. Composition of hull-less barley and oat grains***

| Source | Starch (%, dry basis) | Protein (%, dry basis) | Beta-glucan (%, dry basis) | Ash (%, dry basis) |
|---|---|---|---|---|
| Hull-less Barley Waxy (CDC-Fibar) | 55.1 ± 0.3 | 17.9 ± 0.1 | 8.7 ± 0.1 | 2.1 ± 0.1 |
| | | | | |
| Hull-less Barley Regular (CDC-McGuire) | 65.8 ± 0.6 | 13.1 ± 0.3 | 4.6 ± 0.1 | 1.9 ± 0.1 |
| | | | | |
| Hull-less Barley High Amylose | 57.5 ± 0.1 | 15.5 ± 0.1 | 6.3 ± 0.1 | 2.2 ± 0.1 |
| | | | | |
| Regular Oat (Derby) | 53.1 ± 0.3 | 15.1 ± 0.1 | 4.1 ± 0.1 | 2.1 ±0.2 |
| | | | | |
| High Beta-Glucan Oat (HiFi) | 54.1 ± 0.1 | 18.3 ± 0.1 | 5.9 ± 0.3 | 2.2 ± 0.1 |
| | | | | |

| | | | | |
|---|---|---|---|---|
| *Values are means of triplicate determinations. | | | | |

Overall, the starch and beta-glucan contents were higher in the barley grains than the oat grains.
The starch content of the barley grains followed the order: regular (65.8%), high amylose (57.5%) and waxy (55.1 %). The starch content of oat grains was approximately 53-54%. The beta-glucan content of the barley grains followed the order: waxy (8.7%), high amylose (8.3%) and regular (4.6%). The beta-glucan content was higher for high beta-glucan oat (5.9%) than regular oat (4.1 %).

The protein content of the barley grains followed the order: waxy (17.9%), high amylose (15.5%) and regular (13.1 %). The protein content was higher for the high beta-glucan oat (18.3%) than regular oat (15.1%). The ash content of the barley and oat grains ranged from 1.9-2.2%.

Example 3 - Heat treatment to grains or meal/flour

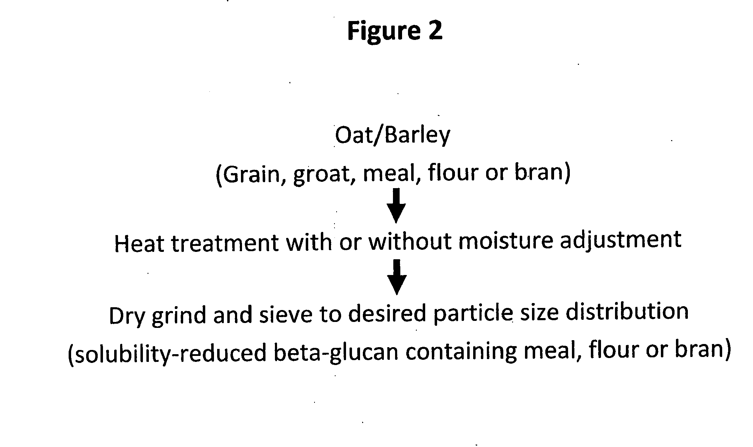

Heat treatment to grains/meal/flour/bran was performed according to the flow diagram illustrated in Figure 2. Flour/meal or whole grains were treated under various temperature and moisture combinations.

*A) Heat-moisture treatment to meal or flour*: Barley or oat grains were milled (Udy mill with 0.25 mm screen) to obtain meal or flour, placed in a sealed glass container, heat treated for different time intervals in an air-flow oven with or without moisture adjustment. Heat treatment was performed as follows:
- at 80° or 100°C for 20 h,
- at 120° or 140°C for 3 h,
- at 160° or 180°C for 1 h, and
- at 190° for 30 minutes.
   Similar heat treatments were also performed after adjusting the meal/flour moisture content to 20-40% (w/w).

*B) Heat-moisture treatment to grains*: Barley or oat grains were placed in an aluminum pan (3-4 grain bed thickness) and heat treated without covering/sealing the pan under various temperature-time combinations as follows:
- 100°C for 3 h;
- 100°C for 20 h;
- 120°C for 3 h;
- 140°C for 3 h;
- 160°C for 1 h;
- 180°C for 1 h; and
- 190°C for 30 min
   At completion of the heat treatment, the grain samples were cooled and milled to obtain meal or flour. The barley grain samples were pearled (removal of outer layers of grains by abrasive techniques - i.e. Satake pearling) to 20% (w/w) and then the pearled grains were milled (Udy mill - 0.25 mm screen) to obtain barley flour. Heat treated oat grains were not subjected to pearling, but directly milled to obtain meal.

Example 4 - Determination of beta-glucan solubility of the native and heat-moisture treated samples

Native or heat-treated barley and oat grain meal or flour (0.3 - 0.4 g) was measured in a 50 mL plastic tube with a cap. Aliquots of anhydrous ethanol (1 mL) and water (19 mL) were added into the tube and thoroughly mixed using a vortex to obtain a smooth slurry free of clumps. The tube containing the slurry was incubated at 25°C for 2 hours in a shaking water bath. Following incubation, the tube was centrifuged at 3000g for 15 min and the beta-glucan content of the supernatant was determined using a kit (Megazyme International Ireland Ltd., Wicklow, Ireland). Solubility was calculated using the following equation: % Solubility = [Total Beta-glucan weight in the supernatant/Total Beta-glucan weight in the sample] x 100

Solubility of beta-glucan in barley flour and oat meal samples in their native state as well as after heat treatment (with or without moisture adjustments) was determined at 25°C and the results are summarized in Table 2.

**Table 2: The effect of heat-moisture treatment on beta-glucan solubility* (at 25°C) of hull-less barley and oat flours**

| Temp/Moisture/Time** (°C/%/h) | Waxy barley | Regular barley | High-amylose barley | Regular oat | High betaglucan oat |
|---|---|---|---|---|---|
| Native | 36.15 ± 1.09 | 35.39 ± 0.39 | 29.62 ± 0.18 | 49.76 ± 0.02 | 42.99 ± 1.12 |
| 80/0**/20 | 36.33 ± 0.58 | 35.02 ± 1.82 | 28.68 ± 2.41 | 48.55 ± 1.74 | 43.44 ± 0.34 |
| 80/20/20 | 33.25 ± 1.05 | 35.98 ± 0.59 | 26.95 ± 1.56 | 49.74 ± 1.66 | 42.68 ± 0.65 |
| 80/40/20 | 19.45 ± 0.38 | 18.88 ± 0.34 | 16.98 ± 1.01 | 48.37 ± 2.25 | 43.99 ± 0.01 |
| 100/0/20 | 23.36 ± 0.44 | 32.80 ± 1.37 | 22.14 ± 0.73 | 42.44 ± 1.20 | 43.12 ± 0.78 |
| 100/20/20 | 20.98 ± 0.59 | 27.83 ± 0.69 | 20.19 ± 0.50 | 39.98 ± 0.66 | 38.63 ± 1.05 |
| 100/40/20 | 16.12 ± 0.68 | 14.56 ± 0.70 | 11.66 ± 0.54 | 37.66 ± 1.08 | 34.83 ± 0.45 |
| 120/0/3 | 16.94 ± 0.58 | 24.98 ± 1.00 | 16.29 ± 0.57 | 35.50 ± 0.35 | 35.10 ± 1.15 |
| 120/20/3 | 30.18 ± 1.52 | 28.20 ± 0.26 | 19.10 ± 0.99 | 38.30 ± 0.56 | 36.72 ± 2.60 |
| 120/40/3 | 35.10 ± 0.98 | 32.98 ± 2.02 | 22.10 ± 1.32 | 40.10 ± 2.20 | 41.98 ± 0.74 |
| 140/0/3 | 10.86 ± 1.02 | 11.10 ± 0.69 | 12.11 ± 0.82 | 32.85 ± 0.55 | 30.63 ± 1.65 |
| 140/20/3 | 14.86 ± 0.56 | 23.98 ± 1.11 | 18.89 ± 1.08 | 35.40 ± 1.04 | 34.15 ± 0.34 |
| 140/40/3 | 20.54 ± 0.92 | 25.82 ± 0.57 | 21.99 ± 0.21 | 38.23 ± 0.31 | 39.32 ± 0.28 |
| 160/0/1 | 18.86 ± 0.39 | 23.10 ± 1.23 | 22.19 ± 0.32 | 29.85 ± 0.55 | 23.63 ± 1.65 |
| 160/20/1 | 24.36 ± 0.66 | 27.78 ± 1.39 | 28.89 ± 2.01 | 32.40 ± 0.89 | 26.15 ± 0.44 |
| 160/40/1 | 28.39 ± 0.32 | 29.13 ± 0.36 | 31.25 ± 0.96 | 34.13 ± 1.31 | 29.32 ± 0.98 |
| 180/0/1 | 26.32 ± 1.36 | 29.36 ± 0.11 | 28.13 ± 0.33 | 22.85±0.65 | 19.63 ± 0.65 |
| 180/20/1 | 28.12 ± 0.39 | 32.15 ± 0.32 | 29.13 ± 1.32 | 23.98 ± 1.56 | 21.39 ± 0.84 |
| 180/40/1 | 30.45 ± 1.11 | 34.52 ± 1.23 | 31.25 ± 0.11 | 26.23 ± 1.31 | 24.33 ± 0.78 |
| 190/0/0.5 | 31.25 ± 0.23 | 33.15 ± 0.23 | 34.29 ± 1.02 | 16.75 ± 0.15 | 15.19 ± 2.10 |
| 190/20/0.5 | 33.49 ± 0.78 | 34.98 ± 0.19 | 37.43 ± 2.08 | 18.32 ± 0.69 | 17.36 ± 0.31 |
| 190/40/0.5 | 36.42 ± 0.72 | 36.82 ± 1.95 | 39.42 ± 0.99 | 21.12 ± 1.32 | 19.56 ± 0.78 |

| | | | | | |
|---|---|---|---|---|---|
| *All data represent the mean of two replicates. **Temp/Moisture/Time = Temperature/Moisture/Time; Zero moisture indicates that no moisture adjustment was performed i.e. the flour was treated "as is" at its native moisture level (∼10%, w/w). | | | | | |

The beta-glucan solubility of native barley flour, 29-36% at 25°C, was lower than that of native oat flour 42-49% at 25°C. Heat treatment, with or without moisture adjustment, influenced the solubility of beta-glucan in native barley or oat meal samples. Zero moisture indicates that no moisture adjustment was performed prior to heat treatment; i.e., the flour was heat treated at its native moisture level (∼10%, w/w). In all three barley genotypes, at lower treatment temperatures (80°C and 100°C), the solubility (determined at 25°C) decreased with increasing moisture levels. However, at higher treatment temperatures (120°C, 140°C, 160°C, 180°C and 190°C), the solubility increased with increasing moisture levels. In oat meal from both genotypes, heat treatment at 80°C caused marginal changes in solubility with the increasing moisture levels. However, at 100°C, 120°C, 140°C 160°C, 180°C and 190°C, with no moisture adjustment to meal, the solubility decreased with increasing treatment temperature. However, at each treatment temperature the solubility increased with increasing moisture levels. In barley the highest solubility reduction was achieved when heat treatment was performed at 140°C for 3 hours with no moisture adjustment prior to heat treatment, whereas in oat, the highest solubility reduction was achieved when heat treatment was performed at 190°C for 30 minutes with no moisture adjustment prior to heat treatment. Under these conditions, the beta-glucan solubility of barley flour and oat meal was substantially reduced to approximately 10-17%.

The effect of heat-treated barley and oat grains (with no moisture adjustment) on beta-glucan solubility (determined at 25°C) was examined. In this experiment, the grains were left open during heat treatment (i.e. not in sealed glass containers). In barley grains, the solubility decreased with increasing treatment temperature from 100-140°C and then the solubility increased 160-190°C (Table 3). The highest reduction in beta-glucan solubility was achieved when heat treatment was performed at 140°C for 3 hours. In oat grains, the solubility decreased with increasing treatment temperature from 100-190°C. Under these conditions, the beta-glucan solubility of barley and oat was substantially reduced to approximately 9% for waxy barley and 14% for oat.

**Table 3: The effect of heat treatment to barley and oat grains without any moisture adjustment on the beta-glucan solubility determined at 25°C.**

| Source | Temperature/Moisture**/Time (°C/%/h) | waxy barley | High beta-glucan oat |
|---|---|---|---|
| Native | - | 35.15 ± 0..89 | 43.12 ± 0.23 |
| Heat Treated | 100/0**/3 | 34.15 ± 0.42 | 43.82 ± 0.55 |
| | 100/0/20 | 25.42 ± 0.21 | 40.55 ± 0.66 |
| | 120/0/3 | 15.57 ± 0.39 | 34.21 ± 0.35 |
| | 140/0/3 | 9.51 ± 0.33 | 31.23 ± 1.08 |
| | 160/0/1 | 19.51 ± 0.53 | 22.97 ± 1.11 |
| | 180/0/1 | 25.33 ± 0.23 | 18.59 ± 0.28 |
| | 190/0/0.5 | 31.25 ± 0.79 | 14.12 ± 0.78 |

| | | | |
|---|---|---|---|
| *All data represent the mean of two replicates. **Zero moisture indicates that no moisture adjustment was performed i.e. the grains were treated "as is" at its native moisture level (∼10%, w/w). | | | |

Example 5 - Viscosity of native and heat treated barley or oat meal plus water slurry at different mixing time intervals

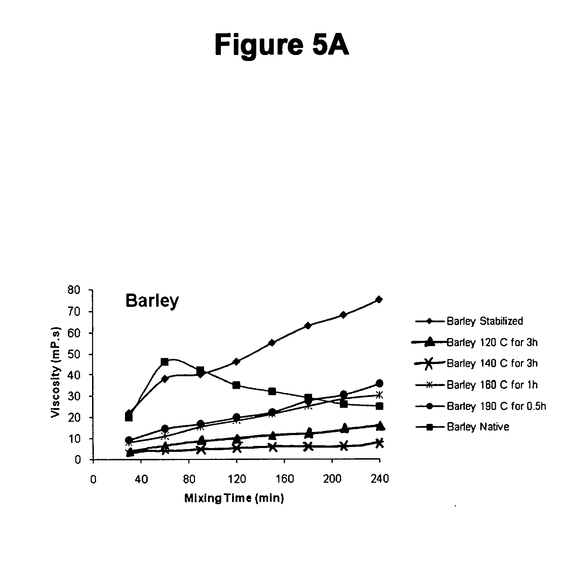

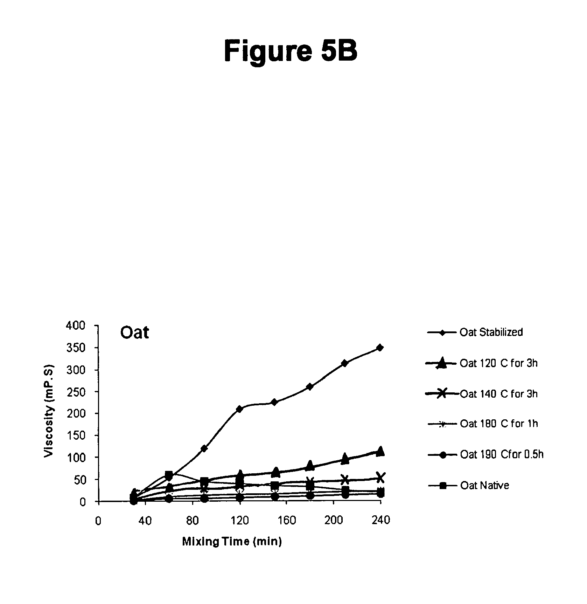

Grains from barley and oat, both native, stabilized and heat treated (120°C for 3h; 140°C for 3 h; 160°C for 1h; 180°C for 1h and 190°C for 30 minutes) were milled using a laboratory mill (particulates <250 microns) into meal and then mixed with distilled water (meal:water = 1:10 w/v). The slurry temperature was maintained at 25°C while mixing at a moderate speed for up to four hours. A ParPhysica^{™} rheometer was used to measure the viscosity at different time intervals (Figure 5).

Native (un-stabilized) barley and oat meals increased in viscosity development initially up to ∼60 minutes and then decreased with time. This was expected since the native (un-stabilized) grains contain residual amounts of endogenous enzymes such as cellulase or beta-glucanase that can depolymerise beta-glucan resulting in the loss of aqueous viscosity. These enzymes are usually inactivated during a process called stabilization commonly performed to oat groats, prior to release into the food market, by commercial oat industries. Stabilization is a process where a short duration treatment with super heated steam given to oat groats followed by gradual drying of groats at temperatures usually <90°C. This process inactivates enzymes that are native to oat grains and thus enhance the shelf stability of groats and products thereof.

Stabilized barley and oat meals showed fast viscosity development (Figure 5) and slurry thickening. However, meals produced from heat treated grains showed slow viscosity development, being that the extent of viscosity development was inversely related to the intensity of the heat treatment. The lowest viscosity development was observed in the meals produced from grains treated at 140°C for 3 hours for barley and 190°C for 30 minutes for oat, where no considerable viscosity developed up to 4 hours of mixing time. These results clearly demonstrated that heat-treated grains (especially at the aforementioned treatment conditions) can be used in the aqueous fractionation of meal into starch and fibre concentrates, without encountering problems due to viscosity development and slurry thickening during processing.

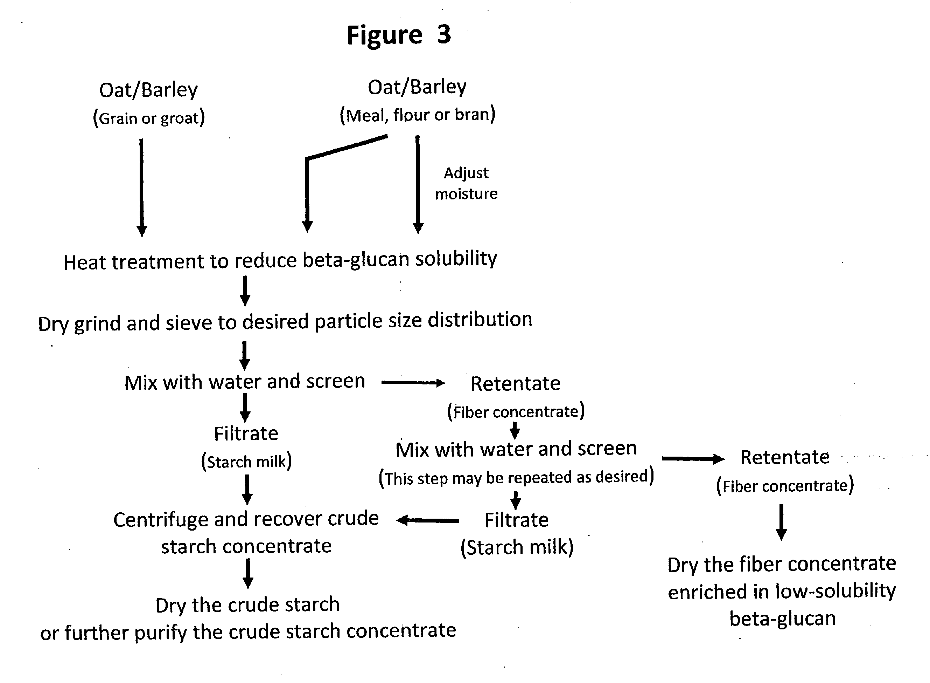

Example 6 - Aqueous fractionation of heat treated barley and oat grains Barley and oat grains were heat treated at 140°C for 3 hours (for barley) and 190°C for 30 minutes (for oat) with no moisture adjustment and then dry milled and fractionated using an aqueous process as depicted in Figure 3 into starch and fibre concentrates. The heat treated barley and oat grains were ground and sieved to a desirable particle size distribution (100% pass through 500 micron or 250 micron sieve) and then mixed with water (meal/flour : water = 1: 5 w/v) and screened (the pore diameter of the screen was ∼65 microns). The resultant starch milk filtrate was then centrifuged to recover crude starch concentrate and then dried. The material left behind on the screen contained the fibre/beta-glucan concentrate, which was then washed again (by mixing and screening with water five times the original flour wt. basis) by mixing with water, screened again to recover the insoluble beta-glucan concentrate, and then dried.

The yield and composition of the starch and fibre concentrates are presented in Table 4. Due to reduction in beta-glucan solubility (as shown in Table 3 and Figure 5), no challenges were encountered due to thickening of beta-glucan during aqueous fractionation. The yield of starch and fibre concentrates were 73% and 26% for barley and 80-82% and 12-19% for oat. The starch concentrate from barley and oat had a starch content in the range of 69-72%. The fibre concentrates were found to be substantially enriched in beta-glucan (22-32%). It was demonstrated with heat treated oat (180°C for 1h) that the concentration of beta-glucan in the fiber concentrate can be enhanced from 22% (w/w) to 32% (w/w) when the heat treated oat grain meal was finely milled to reduce the particle size from 100% pass through a 500 microns screen to 100% pass through a 250 microns screen.

**Table 4: Yield and composition of starch and beta-glucan concentrates produced through fractionation of heat treated barley and oat grains according to protocol outlined in Figure 3**

| Source | Starch Concentrate | | | Fibre Concentrate | | |
|---|---|---|---|---|---|---|
| | Yield (%) | Composition (%) | | Yield (%) | Composition (%) | |
| | | Starch | Beta-glucan | | Starch | Beta-glucan |
| CDC-Fibar (140°C for 3h) (500um milled)* | 73.16 ± 2.09 | 72.19 ± 0.58 | 1.52 ± 0.20 | 25.73 ± 1.36 | 9.81 ± 0.32 | 22.71 ± 0.38 |
| | | | | | | |
| HiFi-Oat (140°Cfor3h) (500um milled)* | 80.45 ± 1.52 | 69.31 ± 0.84 | 1.45 ± 0.11 | 18.31 ± 1.05 | 10.38 ± 0.52 | 22.16 ± 0.31 |
| | | | | | | |
| HiFi - Oat (180°C for 1h) (500um milled)* | 80.94 ± 0.56 | 68.15 ± 0.97 | 1.47 ± 0.01 | 19.64 ± 0.19 | 11.79 ± 0.42 | 20.98 ± 0.89 |
| | | | | | | |
| HiFi - Oat (180°C for 1h) (250um milled)* | 82.39 ± 0.78 | 65.25 ± 0.67 | 1.97± 0.01 | 11.88 ± 0.39 | 7.79 ± 0.39 | 32.1 ± 0.38 |
| | | | | | | |

| | | | | | | |
|---|---|---|---|---|---|---|
| All data represent the mean of duplicate measurements of the two replicate fractionation experiments *Milled in a grinder to the particle size specification of "100% of meal pass through 500 microns or 250 microns sieve" | | | | | | |

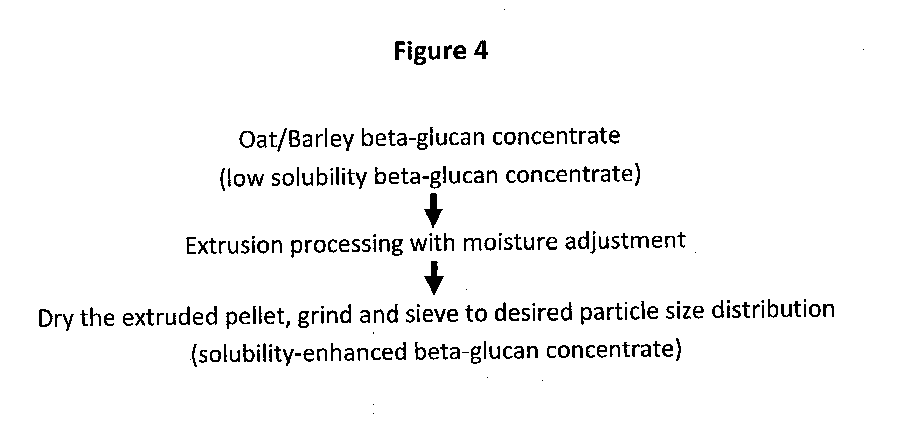

Example 7 - Extrusion processing of fibre concentrates Solubility of beta-glucan concentrate produced from heat treated grain materials was enhanced by extrusion processing (Figure 4) at elevated temperatures (120-140°C) and moisture content (40-45%, w/w). A Brabender Plasticoder^{™} lab scale twin screw extrusion cooker was used in this study (C. W. Brabender Instruments, South Hackensack, NJ, USA). The extruded pellet was dried at temperatures below 60°C, ground (Wretch Mill) and sieved (Tyler screen) to the desired particle size distribution.

The solubility of fibre concentrates, produced from heat treated grains according to the method described in Example 6 (depicted in Figure 3), ranged from 3-4% (Table 5), which is slightly lower than the beta-glucan solubility of heat treated grains (9-18%). When extrusion processed at 120-140°C under 40-45% (w/w) moisture, the beta-glucan solubility of the fibre concentrate increased to 55-71%. Testing of the aqueous viscosity of the extruded fibre concentrates after solubilization at human body temperature (37°C) for 4 h was also performed at a net beta-glucan concentration of 0.5% (w/v). Both barley and oat samples showed high viscosity (78 cps and 85 cps, respectively, at a shear rate of 112 s⁻¹).

**Table 5: Solubility* of beta-glucan in the native and heat treated grains** as well as in the low solubility fibre concentrate produced according to Figure 3 before and after extrusion cooking**

| Source | Native grain | Heat treated grain** | Fibre concentrate produced according to Fig 3 | Extruded fibre concentrate*** |
|---|---|---|---|---|
| Barley. (CDC-Fibar) (Waxy type) | 36.15 ± 1.09 | 15.57 ± 0.39 *(120°C for 3 h)* | 4.31 ± 0.32 | 65.76 ± 1.11 |
| | | | | |
| Barley (CDC-Fibar) (Waxy type) | 36.15 ± 1.09 | 9.51 ± 0.33 *(140°C for 3 h)* | 3.15 ± 0.21 | 55.23 ± 1.26 |
| | | | | |
| Oat (HiFi) (High beta-glucan oat) | 42.99 ± 1.12 | 18.59 ± 0.28 *(180°C for 1 h)* | 3.53 ± 1.11 1 | 71.38 ± 1.24 |
| | | | | |
| Oat (HiFi) (High beta-glucan oat) | 42.99 ± 1.12 | 14.12 ± 0.78 *(190°C for 30 min)* | 3.82 ± 0.75 | 69.18 ± 1.05 |
| | | | | |

| | | | | |
|---|---|---|---|---|
| *Values are means of replicate determinations; Solubility was determined at 25°C for 2h of mixing in excess water **Treatment conditions are indicated in italics below the solubility values ***Fibre concentrate produced from the heat treated grain according to the method shown in Figure 3 and then extruded (according to Figure 4) in a twin screw extruder at 120-140°C and 40-45% moisture. | | | | |

### References

All publications mentioned in this specification are indicative of the level of skill of those skilled in the art to which this invention pertains. All publications are herein incorporated by reference, where permitted, to the same extent as if each individual publication was specifically and individually indicated to be incorporated by reference.
Beer, M.U., Wood, P.J., Weisz, J. and Fillion, N. (1997) Effect of cooking and storage on the amount and molecular weight of (1 leads to 3) (1 leads to 4)-beta-D-glucan extracted from oat products by an in vitro. Cereal Chem. 74:705-709.
Braaten, J.T., Wood, P.J., Scott, F.W., Wolynetz, M.S., Lowe, M.K., Bradley-White, P. and Collins, M.W. (1994) Oat beta-glucan reduces blood cholesterol concentration in hypercholesterolemic subjects. Eur. J. Clin. Nutr. 48(7):465-74.
Department of Health and Human Services, US Food and Drug Administration, Food labeling: Health claims: Soluble dietary fibre from certain foods and coronary heart disease. Federal Register July 28, 2003 (Volume 68, Number 144), pages 44207-09. 21 CFR Part 101 [Docket No. 2001Q-0313].
Department of Health and Human Services, US Food and Drug Administration, Food labeling: Health claims: Soluble dietary fibre from certain foods and coronary heart disease. Federal Register May 22, 2006 (Volume 71, Number 98), pages 29248-50. 21 CFR Part 101 [Docket No. 2004P-0512].
Gaosong, J. and Vasanthan, T. (2000) Effect of extrusion cooking on the primary structure and water solubility of beta-glucans from regular and waxy barley. Cereal Chem. 77:396-400.
Izydorczyk, M.S., Storsley, J., Labossiere, D., MacGregor, A.W. and Rossnagel, B.G. (2000) Variation in total and soluble beta-glucan content in hulless barley: effects of thermal, physical, and enzymic treatments. J. Agric. Food Chem. 48:982-989.
Jenkins, D.J. Wolever, T.M., Leeds, A.R., Gassull, M.A., Haisman, P., Dilawari, J., Goff, D.V., Metz, G.L. and Alberti, K.G. (1978) Dietary fibres, fibre analogues, and glucose tolerance: importance of viscosity. Br. Med. J. 1(6124): 1392-4.
Lan-Pidhainy, X.; Wolever, T.M.; Wood, P.J.; Brummer, Y.; Tosh, S.M. (2007) Reducing beta-glucan solubility in oat bran muffins by freeze-thaw treatment attenuates its hypoglycemic effect. Cereal Chem. 84: 512-517.
Morgan, K.R. Beta-glucan products and extractions processes from cereals. International Publication No. WO 98/13056, published April 2, 1988.
Vasanthan, T., Gaosong, J., Yeung, J. and Li, J. (2002) Dietary fibre profile of barley flour as affected by extrusion cooking. Food Chemistry 77:35-40.
Wood, P.J., Braaten, J.T., Scott, F.W., Riedel, K.D., Wolynetz, M.S. and Collins, M.W. (1994) Effect of dose and modification of viscous properties of oat gum on plasma glucose and insulin following an oral glucose load. Br. J. Nutr. 72(5):731-43.

## Claims

1. A method of producing a solubility-reduced, beta-glucan containing product from plant material comprising beta-glucan, comprising the step of heating the plant material having a moisture content of less than 40% at an elevated temperature greater than about 50° C

2. The method of claim 1 comprising the further optional step of forming a meal or flour from the plant material prior to heating, and/or milling the heat-treated plant material under dry conditions and sieving to obtain the solubility-reduced, beta-glucan containing product..

3. The method of claim 1 comprising the further optional step of adjusting the moisture content of the plant material by mixing the plant material with water, or drying the plant material, before the heating step.

4. The method of claim 1, wherein the plant material comprises a cereal grain, groat, de-hulled grain, hull-less grain, pearled grain, pearled groat, meal, flour or bran.

5. The method of claim 4, wherein the cereal grain comprises barley grain or oat grain.

6. The method of claim 1, wherein the elevated temperature is greater than about 80°C, 100°, 120°, 140°C, 160° C, or 180°C.

7. The method of claim 1 or 3, wherein the moisture content of the plant material is, whether or not adjusted, is less than 30% (w/w), or 20%, or is about 10%.

8. The method of claim 1, wherein the plant material is heated at the elevated temperature for a duration of greater than about 30 minutes, 60 minutes, 1 hour, 2 hours or 3 hours.

9. The method of claim 2 wherein the plant material comprises barley, and is heated at about 80° C to about 100° C with a moisture content of greater than about 20%, or is heated at about 120° C to about 190° C with a moisture content of less than about 20%.

10. The method of claim 9 wherein the barley plant material is heated at about 140° with a moisture content of about 10% for about 3 hours.

11. The method of claim 2 wherein the plant material comprises oats, and is heated at a temperature greater than about 100° C with a moisture content of less than about 20%.

12. The method of claim 16 wherein the oat plant material is heated at a temperature of about 190° C with a moisture content of about 10% for about 30 minutes.

13. The method of claim 1, further comprising the step of contacting the resulting solubility-reduced beta-glucan containing product with water, and physically separating a starch-rich fraction and a first beta-glucan-rich fiber fraction.

14. The method of claim 13, further comprising the step of contacting the first beta-glucan rich fraction with water and recovering a second beta-glucan fraction.

15. The method of claim 13 or 14, further comprising the step of restoring the solubility of the first or second beta-glucan rich fraction.

16. The method of claim 15 wherein the solubility is restored by extrusion processing the second beta-glucan fraction, recovering a pellet, drying the pellet and followed by milling of pellet under dry conditions and sieving to obtain a soluble, beta-glucan concentrate.

17. The method of claim 16, wherein the solubility is restored by cooking, baking or boiling the second beta-glucan fraction to obtain a soluble, beta-glucan concentrate.

18. A oat-based product comprising beta-glucan having a beta-glucan solubility of less than 35%, 20%, 15%, 10% or 5%.

19. A barley based product comprising beta-glucan having a beta-glucan solubility of less than about 25% , 15%, 10% or 5%.

20. A restored solubility beta-glucan concentrate produced from a solubility-reduced beta-glucan product.

21. A food product comprising a solubility reduced beta-glucan product or a restored solubility beta glucan concentrate.
